# EUROPEAN PATENT APPLICATION

(11) **EP 0 566 287 A1**
(43) Date of publication of application: **20.10.1993**
(21) Application number: 93302592.6
(22) Date of filing: 01.04.1993
(51) Int. Cl.: F16L 23/06, F16L 37/20

(54) **A quick release connection device**

(30) Priority: 13.04.1992 GB 9208101; 27.04.1992 GB 9209042
(71) Applicant: BRIDON plc, Doncaster South Yorkshire DN4 9JX (GB)
(72) Inventor: Belk, Alan, Sheffield, South Yorkshire, S11 7LE (GB)
(74) Representative: Newby, Martin John

(57) **Abstract**

A quick release connection device (1) for securing flanged pipes together comprises a clamping collar (4) having a plurality of clamp parts (5-8) articulated together and including first and second collar parts (5,8) at opposite ends of the collar (4) and a connecting member (12) hinged to the first collar part (5) and pivotable relative thereto on actuation of power-operable moving means (31) between a connecting position in which it is connected by a resilient connection (15) to the second collar part (8) and a releasing position in which it is disconnected from the second collar part (8), the first collar part (5) opening under the action of the resilient connection (15) as the connecting member (12) moves from its connecting position to its releasing position. An opening mechanism acts on the second collar part (8) to cause the latter to open on pivotal movement of the connecting member (12) into its releasing position.

## Description

This invention relates to a quick release connection device for securing the ends of conduits having mating end flanges, the quick release connection device being of the kind comprising a clamping collar for clamping the mating end flanges of the conduits together and having a plurality of collar parts articulated together and including first and second collar parts at opposite ends of the collar, and a connecting member hinged to the first collar part and pivotable relative thereto between a connecting position in which it is connected by a resilient connection to the second collar part and a releasing position in which it is disconnected from the second collar part, the first collar part springing open under the action of the resilient connection as the connecting member moves from its connecting position to its releasing position, and power-operable moving means for effecting pivotal movement of the connecting member out of its connecting position.

It is often necessary to convey low temperature liquid gas, such as LNG (liquid natural gas), LPG (liquid petroleum gas) or the like, through a pipeline. When conveying such low temperature fluids, the pipeline tends to become iced up rendering difficult the de-coupling of connected lengths of piping. For safety purposes there is a need to be able to disconnect pipe lengths quickly and reliably even when the pipe lengths are covered with layers of ice.

A known quick release connection device of the kind referred to is disclosed in GB-B-2039589. This known connection device incorporates as the connecting member a spring-loaded tie rod for connecting together first and second flange clamps at opposite ends of the clamping collar. The tie rod is hinged to the first flange clamp and is releasably connected to the second flange clamp. On actuation of a hydraulic cylinder, the tie rod is released from its connection with the second flange clamp, thereby releasing the stored spring energy which is transmitted to the first flange clamp forcing the latter to pivot open. However the released spring energy is of little or no use in forcing the second flange clamp open and, if heavily iced, the collar may remain in a pipe connecting condition.

Another known connection device for securing flanged conduit ends together, the adjacent conduit ends each having a fluid check value movable between open and closed positions, is described in EP-A-0175469. In this known device a clamping collar is described which can only be unlocked when at least one of the check valves is closed.

The present invention seeks to provide an improved quick release connection device. In a first aspect the invention provides an improved connection device in which both clamp elements at opposite ends of a clamping collar pivot open on release of the connection. In a second aspect, the invention is a modification of a conduit connection system which can only be released when one or more conduit check valves are closed.

According to a first aspect of the present invention a quick release connection device of the kind referred to is characterised in that an opening mechanism is arranged to act on the second collar part to cause the latter to open on pivotal movement of the connecting member into its releasing position.

A quick release connection device according to the invention has opening mechanisms providing, during release of the connection device, opening forces acting on both the first and second collar parts. This is important, for example, in cryogenic applications where the connection device may become iced over and where it is therefore necessary to positively apply opening forces to the collar in order for it to "break out" of the ice covering. Furthermore, the resilient connection provides stored energy which acts on the collar to maintain a tight connection whilst allowing thermal expansion and contraction of the collar and conduit end flanges.

Preferably the opening mechanism comprises resilient means acting on the second collar part. However the opening mechanism may comprise other opening means, e.g. power operated devices, to actively pivotally open the second collar part.

Conveniently the resilient means, e.g. a spring member, provides an opening force acting to pivot the second collar part open when actuation of the moving means causes the connecting member to move into its releasing position. In particular the opening force is intended to cause the second collar part to spring open.

Suitably the moving means acts on a lever pivotable about a first axis between a locking position and a release position, pivoting of the lever about said first axis from its locking position to its release position, to effect movement of the connecting member into its releasing position, generating said opening force provided by the resilient means. Preferably the lever when in its locking position locks the connecting member in its connecting position. In this case the lever includes a first lock part which is intended to interlock with a second lock part of the connecting member when the latter is in its connecting position, pivotal movement of the leverfrom its locking position causing disengagement of the first and second lock parts. Preferably the resilient means comprises a spring-loaded extendable elongate member which is extended when the lever is pivoted into its release position, the extension of the elongate member generating a stored opening force which is released to pivot open the second collar part. Preferably the opening force acts on the lever to cause the latter to pivot about a second axis parallel to, and spaced from, the first axis, the lever being pivotally connected at the first axis to extension arm means of the second collar part, whereby pivoting movement of the lever about said second axis is transmitted via the arm means to effect the opening movement of the second collar part.

Suitably a retractable locking pin connects the lever to the arm means when the connecting member is in its connecting position, retraction of the locking pin being necessary to enable the connecting member to move out of its connecting position.

Preferably the power moving means comprises a hydraulic actuator, e.g. a hydraulic ram.

The connecting member conveniently includes a spring-loaded engaging member for interengagement with an engaging portion of the second collar part when the connecting member is in it connecting position. On disengagement of the engaging member and engaging portion as the connecting member is moved into its releasing position, the stored spring force in the spring-loaded engaging member is released to cause the first collar part to spring open.

Conveniently said collar parts comprise a plurality of flange clamps intended to be spaced circumferentially around a pair of mating conduit end flanges, and tie rods interconnecting different pairs of flange clamps, two of the flange clamps comprising the first and second clamp parts.

According to a second aspect of the present invention a connection system for securing the ends of conduits having mating end flanges and each provided with a fluid flow check valve movable between open and closed positions, comprises a clamping collar for clamping the mating end flanges of the conduits together and having a plurality of collar parts articulated together and including first and second collar parts at opposite ends of the collar, and a connecting member hinged to the first collar part and pivotable relative thereto between a connecting position in which it is connected to the second collar part and a releasing position in which it is disconnected from the second collar part, and a locking mechanism for holding the connecting member in its connected position when at least one of the check valves is in its closed position.

Suitably the connection system further comprises a locking lever pivotable between a first position for locking the connecting member in its connecting position and a second position, arm means attached to and forming an extension of the second collar part, a retractable locking pin movable into and out of a locking position, the locking pin when in its locking position interengaging with the locking lever and the arm means, e.g. interengaging with aligned openings in the locking lever and arm means, for preventing movement of the locking lever out of its first position, and means for retracting the locking pin from its locking position when at least one of the check valves is in its closed position.

The connection system according to said second aspect of the present invention is intended to be a modification of the invention disclosed in EP-B-0175469 which shows a ram actuated retractable locking pin which is only movable out of a first locking position when at least one of the conduit fluid flow check valves is closed. The locking pin, check valves and associated linking means for linking movement of the locking pin to the check valve positions will not be described in detail herein, although the disclosure of EP-B-0175469 is incorporated herein by way of reference to assist understanding of the operation of these various parts.

An embodiment of the invention will now be described, by way of example only, with reference to the accompanying drawings, in which
Figure 1 is a partly sectioned end view of a quick release conduit connection device according to the invention,
Figures 2 and 3 are views from below and to one side, respectively, of part of the conduit connection device shown in Figure 1, and
Figure 4 is a sectional view through a part of a clamping collar of the conduit connection device shown in Figure 1.

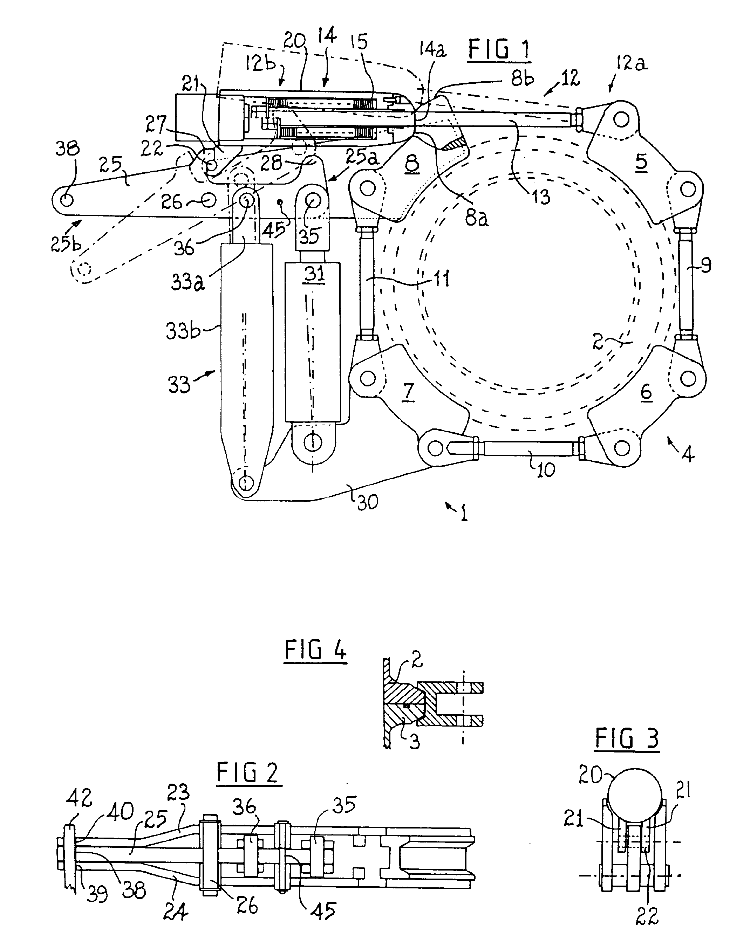

Figures 1 to 4 show various parts of a quick release connection device generally designated 1 for connecting the ends of conduits having mating end flanges 2 and 3. The connection device 1 has been designed to connect conduits carrying low temperature fluids, e.g. low temperature liquid gases such as LNG or LPG, although the connection device can be used for coupling flanged conduits used for conveying other fluids.

The connection device 1 comprises a clamping collar4 having a plurality offlange clamping elements 5-8 linked together by tie rods 9-11 each of which is pivotally joined at its opposite ends to a respective different pair of the clamping elements. Aspring-loaded tie rod 12 has opposite ends 12a and 12b and is pivotally connected at its end 12a to the clamping element 5 positioned at one end of the collar 4. The tie rod 12 comprises a rigid rod portion 13 and a spring-loaded engaging portion 14 movably mounted at the end 12b. The engaging portion 14 is movable away from the end 12a against an increasing resilient biasing force provided by spring means 15. In order to connect the tie rod 12 to the clamping element 8 at the other end of the collar 4, it is necessary for the engaging portion 14 to be moved away from the end 12a, so as to spring load the engaging portion, in order to enable an inner end 14a of the engaging portion 14 to abut against an abutment surface 8a of the clamping element 8. In its full line position shown in Figure 1, the tie rod 12 is in a connecting position with the inner end 14a of the engaging portion resiliently urged into contact with the abutment surface 8a of the clamping element 8. The abutment surface 8a and the contacting end surface of the inner end 14a are both straight and, in the connecting position of the tie rod 12, are situated substantially perpendicular to the axis of the tie rod.

As can be seen in Figures 1 and 3, the spring means 15 are housed within a generally cylindrical housing 20 of the engaging portion 14. A pair of spaced apart lugs 21 locking pin 22 extending therebetween are fixed to, and depend downwardly (as viewed in Figure 1) from, the housing 20.

The flange clamping element 8 has a pair of arm extension members 23 and 24 fixed thereto and extending generally perpendicular to the cylindrical or central axis of the clamping collar 4. These arm extension members 23 and 24 are spaced apart in the axial direction of the clamping collar, are provided with holes 39 and 40 at their outer ends and have an elongate lever 25 pivotally joined thereto, between opposite ends 25a and 25b of the lever, by a pivot pin at pivot 26. The lever 25 is positioned between the arm extension members 23 and 24 and has a locking hook 27 extending transversely of the elongate direction of the lever, a nose 28 at its end 25a and a hole 38 formed therein at its end 25b.

A pair of axially spaced apart lugs 30 (only one of which can be seen in Figure 1) are provided on the clamping elements 7 and have pivotally mounted therebetween lower ends of a hydraulic ram 31 and an extendable resilient member 33 similar to the tie rod 12 and comprising a rod portion 33a and a spring portion 33b movably carried at the lower end of the rod portion 33a. The upper end of the ram 31 is pivotally connected to the end 25a of the lever 25 at pivot 35 and the upper end of the rod portion 33a is pivotally connected to the lever 25 at pivot 36 between pivots 26 and 35.

In normal use the lever25 will be in the horizontal (as viewed in Figure 1), full line position shown in Figure 1 with the locking hook 27 engaging the locking pin 22. In this locking position of the lever 25, the tie rod 12 is retained in its connecting position. A retractable locking pin 42 (see Figure 2) is received within the aligned holes 38, 39 and 40 and locks the lever 25 and arm extension members 23 and 24 in position. The locking pin 42 is similar to the release pin 32 shown in the connection system of EP-B-0175469 and the details of that patent specification are incorporated herein by way of reference. In particular, EP-B-0175469 discloses check valves at the ends of conduits to be secured and mechanisms for ensuring that the locking pin is only retracted when at least one of the check valves is closed.

In order to open the collar 4, the locking pin 42 is retracted, as described in EP-B-0175469, when the conduit check values (not shown) are closed so that the lever 25 and arm extension members 23 and 24 are free to move. The hydraulic ram 31 is then actuated. Initially a shear pin 45 connecting the lever 25 and extension members 23 and 24 prevents pivotal movement of the lever 25 about pivot 26. However as the pressure within the hydraulic ram 31 increases, the pin 45 is sheared and the lever 25 pivots about pivot 26 in a counterclockwise direction. In the initial stages of pivotal movement of the lever 25, the locking hook 27 is disengaged from the locking pin 22. After this initial pivotal movement, the nose 28 of the lever 25 is brought into contact with the housing 20 and, as the ram 31 is fully extended, the continued pivotal movement of the lever 25 causes the tie rod 12 to be pivoted in a clockwise direction so that the latter is moved out of its connecting position into a releasing position. The position of the lever 25 in its release position (i.e. with the ram 31 fully extended) is shown in chain lines in Figure 1. The clamping element 8 has a surface 8b, adjacent abutment surface 8a, which is inclined at an angle to the axis of the tie rod 12. As the tie rod 12 pivots out of its connecting position, the spring-loaded engaging portion 14 first slides over surface 8a and then over surface 8b. As the engaging portion 14 moves over the surface 8b, it moves rapidly towards the end 12a under the action of the spring biasing of the spring means 15. This causes clockwise acceleration of the tie rod 12 about the pivot at 12a under the action of the spring biasing of the spring means 15. The spring energy is thus transferred into angular movement of the tie rod 12 about its pivot point with the clamp element 5, which as the tie rod becomes tangential to clamp element 5 is transferred to the clamp element itself.

The spring-loaded engaging portion 14 comes abruptly to rest at the limit of the spring travel of the spring means 15 and transmits a jolting or jarring force along the rigid rod portion 13 to the clamping element 5. This jolting or jarring force additionally assists in causing the clamping element to spring open.

As the lever25 pivots into its release position, the resilient member 33 is extended against a gradually increasing spring force generated by compression of spring means within the spring portion 33b. When the lever 25 is in the fully pivoted release position, the end 25a is retained it its upper position by the extended ram 31. The spring force generated by the resilient member 33 acts to pivot the lever 25 in a counterclockwise direction about the pivot 35. Since the lever 25 is connected to the arm extension members 23 and 24 by the pivot pin at pivot 26, this pivotal movement of the lever 25 causes the arm extension members 23 and 24 to move and to pivot the clamping element 8 open about its pivotal connection with the tie bar 11, the clamping element 8 snapping open under the spring action of the resilient member 33. Thus the quick release connection device 1 causes both the clamping elements 5 and 8 to be resiliently forced open orapart. Since the device is designed to operate in conditions where ice may form on the collar 4, the snapping open of the clamping elements 5 and 8 assists in breaking away the ice to enable the collar 4 to open and release the conduit ends. It will also be appreciated that in use the spring loaded tie rod 12 will enable clamping pressure to be exerted by the clamping elements 5-8 of the collar 4 on the mating conduit end flanges even if the flanges expand or contract when subjected to varying temperature conditions.

## Claims

1. A quick release connection device (1) for securing the ends of conduits having mating end flanges, the quick release connecting device comprising a clamping collar (4) for clamping the mating end flanges of the conduits together and having a plurality of collar parts (5-8) articulated together and including first (5) and second (8) collar parts at opposite ends of the collar, and a connecting member (12) hinged to the first collar part (5) and pivotable relative thereto between a connecting position in which it is connected by a resilient connection (14,15) to the second collar part (8) and a releasing position in which it is disconnected from the second collar part, the first collar part (5) springing open under the action of the resilient connection as the connecting member (12) moves from its connecting position to its releasing position, and power operable moving means (31) for effecting pivotal movement of the connecting member (12) out of its connecting position, characterised in that an opening mechanism (23-25,33) is arranged to act on the second collar part (8) to cause the latter to open on pivotal movement of the connecting member (12) into its releasing position.

2. A connection device according to claim 1, characterised in that the opening mechanism comprises opening means to actively pivotally open the second collar part (8).

3. A connection device according to claim 1, characterised in that the opening mechanism comprises resilient means (33) acting on the second collar part.

4. A connection device according to claim 3, characterised in that the resilient means (33) provides an opening force acting to pivot the second collar part (8) open when actuation of the moving means (31) causes the connecting member to move into its releasing position.

5. A connection device according to any of the preceding claims, characterised in that the connection device further comprises a lever (25) pivotable about a first axis (26) between a locking position and a release position, the moving means (31) acting on the lever (25) so that pivoting of the lever about said first axis from it locking position to its release position, to effect movement of the connecting member into its releasing position, generating said opening force provided by the resilient means (33).

6. A connection device according to claim 5, characterised in that the lever (25) when in its locking position locks the connecting member (12) in its connecting position.

7. A connection device according to claim 6, characterised in that the lever (12) includes a first lock part (27) which is intended to interlock with a second lock part (22) of the connecting member (12) when the latter is in its connecting position, pivotal movement of the lever (25) from its locking position causing disengagement of the first and second lock parts.

8. A connection device according to claim 6 or 7, characterised in that the resilient means (33) comprises a spring loaded extendable elongate member (33a) which is extended when the lever is pivoted into its release position, the extension of the elongate member generating a stored opening force which is released to pivot open the second collar part (8).

9. A connection device according to claim 8, characterised in that the opening force acts on the lever (12) to cause the latter to pivot about a second axis (35) parallel to, and spaced from, the first axis, the lever being pivotally connected at the first axis to extension arm means (23,24) of the second collar part, whereby pivoting movement of the lever about said second axis (35) is transmitted via the arm means (23,24) to effect the opening movement of the second collar part (8).

10. A connection device according to claim 9, characterised by a retractable locking pin (42) which connects the lever (25) to the arm means (23,24) when the connecting member (12) is in its connecting position, retraction of the locking pin being necessary to enable the connecting member to move out of its connecting position.

11. A connection device according to any of the preceding claims, characterised in that the power-operable moving means (31) comprises an hydraulic actuator, e.g. an hydraulic ram.

12. A connection device according to any of the preceding claims, characterised in that the connecting member (12) includes a spring-loaded engaging member for interengagement with an engaging portion of the second collar part when the connecting member is in it connecting position.

13. A connection device according to any of the preceding claims, characterised in that said collar parts comprise a plurality of flange clamps intended to be spaced circumferentially around a pair of mating conduit end flanges, and tie rods interconnecting different pairs of flange clamps, two of the flange clamps comprising the first and second clamp parts.

14. A connection system for securing the ends of conduits having mating end flanges and each provided with a fluid flow check valve movable between open and closed positions, comprises a clamping collar for clamping the mating end flanges of the conduits together and having a plurality of collar parts articulated together and including first and second collar parts at opposite ends of the collar, and a connecting member hinged to the first collar part and pivotable relative thereto between a connecting position in which it is connected to the second collar part and a releasing position in which it is disconnected from the second collar part, and a locking mechanism for holding the connecting member in its connected position when at least one of the check valves is in its closed position.

15. A connection system according to claim 14, further comprising a locking lever pivotable between a first position for locking the connecting member in its connecting position and a second position, arm means attached to and forming an extension of the second collar part, a retractable locking pin movable into and out of a locking position, the locking pin when in its locking position interengaging with the locking lever and the arm means for preventing movement of the locking lever out of its first position, and means for retracting the locking pin from its locking position when at least one of the check valves is in its closed position.
